Europäisches Patentamt

European Patent Office

Office européen des brevets

(11) Publication number: **0 216 709**
**A1**

## EUROPEAN PATENT APPLICATION

(21) Application number: 86402098.7

(22) Date of filing: 24.09.86

(51) Int. Cl.⁴: **C 08 J 5/18**
**C 08 J 5/00, B 29 D 7/01,**
**B 29 D 23/22, C 08 F 214/06**
**//(B29D7/01,23:22,B29K27:06,**
**23:00)**

(30) Priority: 25.09.85 JP 211244/85

(43) Date of publication of application:
01.04.87 Bulletin 87/14

�esignated Contracting States: **DE FR GB**

(71) Applicant: **Shin-Etsu Chemical Co., Ltd.**
**6-1, Ohtemachi 2-chome**
**Chiyoda-ku Tokyo 100 (JP)**

(72) Inventor: **Ogushi, Yoshimi**
**77-10, Omiya Plaza**
**Omiya-shi Saitama-ken (JP)**

**Soda, Yasutoshi**
**477-6-104, Konba-cho**
**Omiya-shi Saitama-ken (JP)**

**Asou, Hideyuki**
**5-7-35, Chuo Shitte Kamisu-cho**
**Kashima-gun Ibaraki-ken (JP)**

(74) Representative: **Armengaud Aîné, Alain et al**
**Cabinet ARMENGAUD AINE 3 Avenue Bugeaud**
**F-75116 Paris (FR)**

(54) A heat-shrinkable shaped article of polyvinyl chloride resin and a method for the preparation thereof.

㉗ The heat-shrinkable shaped article, e.g. films, sheets and tubes, of the invention is characteristically prepared from a resin composition, of which the principal constituent is a copolymeric resin of 99.5-85% by weight of vinyl chloride and 0.5-15% by weight of ethylene and/or propylene and the content of a plasticizer, if any, does not exceed 10% by weight based on the copolymeric resin. Despite the absence or low content of a plasticizer to give a rigid heat-shrinkable article, the shaped body of the resin composition is highly stretchable at a specified temperature to give a heat-shrinkable article of high heat-shrinkbility even at a relatively low temperature to effect heat-shrinkage with stability and storability at room temperature.

**Description**

# A HEAT-SHRINKABLE SHAPED ARTICLE OR POLYVINYL CHLORIDE RESIN AND A METHOD FOR THE PREPARATION THEREOF

The present invention relates to a heat-shrinkable shaped article of a polyvinyl chloride resin and a method for the preparation thereof. More particularly, the invention relates to a heat-shrinkable shaped article of a polyvinyl chloride resin capable of exhibiting remarkably large heat shrinkage and excellent low-temperature shrinkage as well as a method for the preparation thereof.

As is well known, heat-shrinkable shaped articles, e.g. films, sheets and tubes, of a polyvinyl chloride resin prepared by subjecting a shaped article of the resin to heat-stretching have excellent transparency and surface luster and good heat-sealability as well as good resistance against chemicals and water and printability so that they are widely used as a wrapping material of various commercial goods ranging from foods to machine parts and as cap seals, labels and the like.

Such a heat-shrinkable shaped article of a polyvinyl chloride resin is prepared in principle by first shaping a composition of the polyvinyl chloride resin as the base material into the form of a film, sheet or tube by calendering, T-die extrusion, tubular extrusion and the like and then uniaxially or biaxially stretching or drawing the film, sheet or tube at a temperature slightly higher than the softening point of the polyvinyl chloride resin composition, e.g. 95 to 105 °C, followed by cooling of the thus stretched shaped article without releasing the stretching tension. When rigidity is desired of the heat-shrinkable shaped article of a polyvinyl chloride-based resin composition, the amount of the plasticizer compounded in the resin composition must be limited while difficulties are encountered in the heat-stretching. It is generally understood therefore that the upper limit of the stretching ratio is 250% or, as an industrial process, 200% when a heat-shrinkable shaped article having rigidity is prepared from a polyvinyl chloride-based resin composition with a low plasticizer content. The heat-shrinkable shaped article pre-pared from such a resin composition can exhibit heat shrinkage rarely exceeding 50% and the percentage of shrinkage is particularly low at a relatively low temperature.

An object of the present invention is therefore to provide a heat-shrinkable shaped article having rigidity of a polyvinyl chloride-based resin composition capable of exhibiting high shrinkage even at a relatively low temperature without or with a very small amount of a plasticizer compounded in the resin composition.

Another object of the invention is to provide a method for the preparation of such a heat-shrinkable shaped article of a polyvinyl chloride-based resin composition.

Thus, the heat-shrinkable shaped article of a polyvinyl chloride-based resin composition provided by the present invention is a shaped body made of a copolymeric resin composed of from 99.5% to 85% by weight of vinyl chloride moiety and from 0.5% to 15% by weight of monoolefin moiety, the monoolefin being ethylene and/or propylene, and subjected to stretching at an elevated temperature followed by cooling without releasing the stretching force. The shaped body may be made of a resin composition comprising the above mentioned copolymeric resin and a plasticizer in an amount not exceeding 10% by weight of the copolymeric resin together with other optional additives such as stabilizers and lubricants.

Correspondingly, the method of the present invention for the preparation of a heat-shrinkable shaped article of a polyvinyl chloride-based resin composition comprises the steps of:

(a) molding a copolymeric resin composed of from 99.5% to 85% by weight of vinyl chloride moiety and from 0.5% to 15% by weight of monoolefin moiety, the monoolefin being ethylene and/or propylene, into a shaped body in the form of a film, sheet or tube,

(b) stretching the shaped body at a temperature which is higher by at least 10 °C than but not higher by more than 70 °C than the Clash-Berg heat-distortion temperature of the copolymeric resin; and

(c) cooling the thus stretched shaped body without releasing the stretching force.

It is optional that the copolymeric resin is compounded with a plasticizer in an amount not exceeding 10% by weight together with other additives such as stabilizers and lubricants.

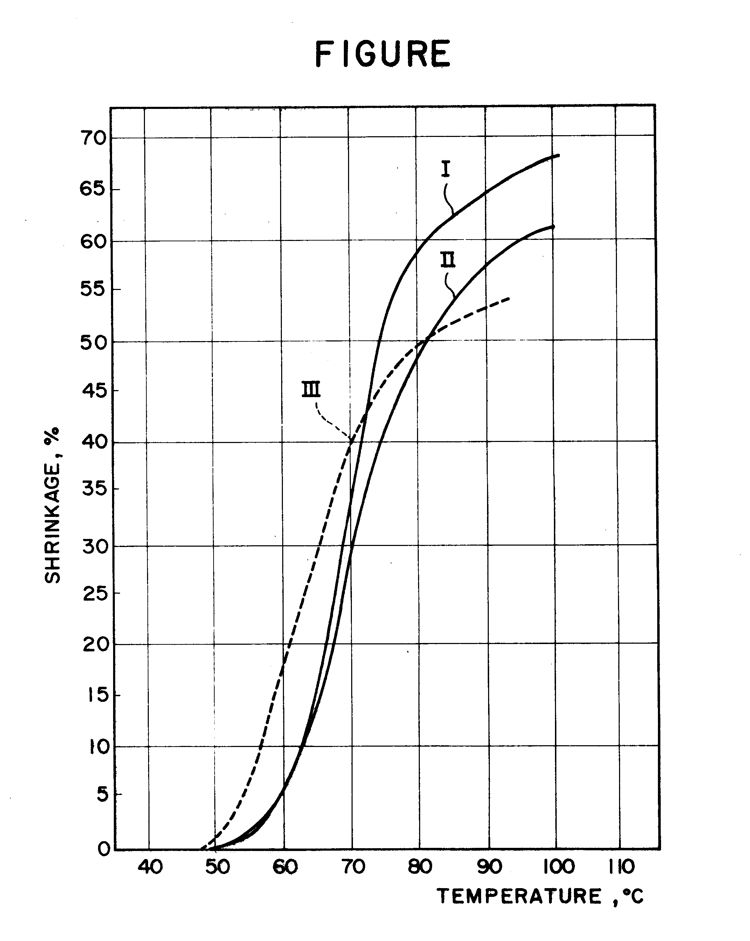

The figure is a graphic showing of the heat-shrinking characteristics of several heat-shrinkable films of polyvinyl chloride-based resins including those prepared in Examples 1 and 2.

As is understood from the above given summary, the most characteristic feature of the heat-shrinkable shaped article of the invention is in the use of a specific copolymeric resin composed of vinyl chloride moiety and monoolefin moiety in the specified weight proportion. When the polyvinyl chloride-based resin is such a specific copolymeric resin, the shaped body of the resin composition can be stretched by 400% or more even when the resin composition contains no or only a small amount of a plasticizer to give a heat-shrinkable shaped article having rigidity. Furthermore, the stretching work can be performed at about 70°C which is much lower than in the prior art in which the temperature for the stretching work is usually in the range from 90 to 105 °C. In addition, the heat-shrinkable shaped article prepared in this manner can exhibit a remarkably large percentage of shrinkage even at a relatively low temperature for shrinking.

The base resin of the polyvinyl chloride-based resin composition, from which the inventive heat-shrinkable shaped article is prepared, is a copolymeric resin of vinyl chloride and a monoolefin such as ethylene and propylene. The weight ratio of the vinyl chloride moiety and the monoolefin moiety in the copolymeric resin should be in the range from 99.5:0.5 to 85:15 or, preferably, from 98:2 to 90:10. When the content of the monoolefin moiety is too small, the desired improvement in the stretchability of the shaped body of the resin composition can hardly be obtained. When the content of the monoolefin moiety is too large, on the other hand, the softening point of the resin composition is unduly decreased and the shaped article prepared therefrom may cause shrinkage even when it is kept at room temperature. The copolymeric resin may be compounded with various additives such as plasticizers, stabilizers, lubricants and the like although the amount of the plasticizer should be limited not to exceed 10% by weight or, preferably, 8% by weight of the copolymeric resin.

The first step of the inventive method is to mold the copolymeric resin or the resin composition comprising the same into a shaped body in the form of a film, sheet tube and the like. The method for molding is not particularly limitative including calendering, T-die extrusion, inflation and others. Thereafter, the shaped body is subjected to stretching at an elevated tem-perature. The degree of stretching naturally depends on the desired percent shrinkage of the heat-shrinkable shaped article but the shaped body molded of the specific copolymeric resin can advantageously be stretched by about 400% or even more. The temperature at which the stretching work is performed can be relatively low, for example, at 70°C in comparison with conven-tional products and it is advantageous to perform the stretching work at a temperature as low as possible in order to obtain a high percentage of heat-shrinkage at a relatively low temperature. In particular, the temperature of stretching should be higher by at least 10°C but not higher by more than 70°C than the Clash-Berg heat-distortion temperature of the copolymeric resin or the resin composition determined according to the procedure specified in JIS K 6745. The temperature should be in the range from 50 to 100°C or, preferably, from 60 to 90°C. When the temperature is too low, the stretching work cannot be performed to obtain a desired ratio of stretching. When the temperature is too high, on the other hand, the shaped body of the copolymeric resin or resin com-position is softened so that the stress in the stretched body is unduly decreased and the stretched body after cooling may lose heat-shrinkability. The thus stretched body is then cooled to room temperature as rapidly as possible retaining the stressed condition.

The heat-shrinkable shaped article, e.g. films, sheets, tubes and the like, of the invention prepared in the above described manner has rigidity because it is shaped of an unplasticized copolymeric resin or a resin composition containing no or only a small amount of a plasticizer. When improvement in the impact strength is desired of the inventive heat-shrinkable shaped article, it is optional that the resin composition is compounded with a small amount of a known ABS resin and the like. The inventive heat-shrinkable shaped article has a high transparency with an extremely small amount of gelled matter or an extremely small number of fish eyes therein. The heat-shrinkable shaped article of the invention is stable at room temperature showing substantially no shrinkage over a long period of time, but can exhibit a high heat-shrinkage to recover 80% or more of the stretch in the stretching work when it is heated at a temperature of, for example, 50 to 80°C by blowing with hot air or by dipping in hot water. Therefore, the heat-shrinkable shaped article. e.g. films, sheets and tubes, of the invention is very useful as a wrapping material of various kinds of foods and other commercial goods.

In the following, the present invention is described in more detail by way of examples.

Example 1.

A vinyl chloride-based resin composition was prepared by uniformly blending 100 parts by weight of a copolymeric resin having an average defree of polymerization of about 800 and composed of 95% by weight of vinyl chloride moiety and 5% by weight of ethylene moiety with 1 part by weight of dioctyl phthalate as a plasticizer, 1 part by weight of octyltin mercaptide, 0.5 part by weight of stearic acid as a lubricant and 5 parts by weight of an MBS resin (Methabrene C-100, a product by Mitsubishi Rayon Co.) as an impact strength improver. The resin composition was shaped by rolling in a calendering machine into a colorless and transparent film of continuous length having a thickness of 0.2 mm.

Then, the film was stretched by 400% at 80°C in the longitudinal direction, i.e. the direction of calendering, on a roller stretching machine and further stretched by 300% at 75°C in the transverse direction using a tenter to give a biaxially stretched heat-shrinkable film of the resin composition. The stretching works could be performed without troubles of broken films so that the heat-shrinkable film as the product could be obtained in a 100% yield.

When the thus prepared heat-shrinkable film was dipped in hot water at 100°C for 5 minutes, the film shrinked by 67% in the longitudinal direction and 60% in the transverse direction. The shrinkage of this film was sufficiently large at a much lower temperature. of, for example 60 to 80°C. The curves I and II in the graph of the accompanying drawing show the temperature vs. % shrinkage characteristics of this heat-shrink-able film in the longitudinal and transverse directions, respec-tively, obtained by dipping the film for 5 minutes in hot water at varied temperatures. The % shrinkage as the ordinate of the graph is defined as the ratio of the decrease in the length of a section of the film after shrinkage to the length of the same section before shrinkage.

Example 2.

A vinyl chloride-based resin composition was prepared by uniformly blending 100 parts by weight of a copolymeric resin having an average degree of polymerization of about 800 and composed of 99% by weight of vinyl chloride moiety and 1% by weight of ethylene moiety with 5 parts by weight of dioctyl phthalate as a plasticizer, 2 parts by weight of octyltin mercaptide as a stabilizer, 0.5 part by weight of calcium stearate as a lubricant and 5 parts by weight of the same MBS resin as used in Example 1 as an impact strength improver. The resin composition was shaped into a tube of 20 mm outer diameter having a wall thickness of 0.25 mm by extrusion using an extruder machine and the tube was radially stretched by about 250% at 70 °C to give a heat-shrinkable tube.

When the heat-shrinkable tube was heated for 5 minutes by dipping in hot water at 65 °C, the tube showed shrinkage of 40% in the radial direction. The temperature vs. % shrinkage character istics of this heat-shrinkable tube are shown by the curve III in the graph of the accompanying drawing.

Example 3.

A vinyl chloride-based resin composition was prepared by uniformly blending 100 parts by weight of a copolymeric resin having an average degree of polymerization of about 800 and composed of 90% by weight of vinyl chloride moiety and 10% by weight of ethylene moiety with 1.5 parts by weight of octyltin mercaptide as a stabilizer, 0.5 part by weight of stearic acid as a lubricant and 5 parts by weight of the same MBS resin as used in Example 1 as an impacxt strength improver. The resin composition was shaped into a colorless and transparent unplasticized polyvinyl chloride resin film of continuous length having a thickness of 0.15 mm by the method of T-die extrusion.

The thus prepared resin film was stretched in the transverse direction by 300% using a tenter at 75 °C and rolled around a reel after air-cooling to 30 °C to give a unidirectionally heat-shrinkable film. When this heat-shrinkable film was dipped for 5 minutes in hot water at 40 °C, the % shrinkage of the film was 1% or smaller so that it was concluded that the heat-shrinkable film was stable and storable at room temperature. On the other hand, the % shrinkage of the heat-shrinkable film was 30% or larger or about 65% when is was dipped for 5 minutes in hot water at 60 °C or at 100 °C, respectively.

For comparison, the same procedure as above was repeated except that the copolymeric resin of vinyl chloride and ethylene was replaced with a homopolymeric polyvinyl chloride resin having an average degree of polymerization of about 700 and addition of 7 parts by weight of dioctyl phthalate as a plasticizer. The results of the measurement of the temperature vs. shrinkage characteristics indicated that the % shrinkage of this comparative film was much smaller than the above described inventive one.

Example 4.

A vinyl chloride-based resin composition was prepared by uniformly blending 50 parts by weight of a copolymeric resin having an average degree of polymerization of about 800 and composed of 90% by weight of vinyl chloride moiety and 10% by weight of propylene moiety and 50 parts by weight of a homopolymeric polyvinyl chloride resin having about the same degree of polymerization as the copolymeric resin with 3.0 parts by weight of dioctyl phthalate as a plasticizer, 0.5 part by weight of stearic acid as a lubricant and 5 parts by weight of the same MBS resin as used in Example 1 as an impact strength improver. The resin composition was shaped into a colorless and transparent film having a thickness of 0.2 mm by rolling on a calendering machine.

This resin film was subjected to biaxial stretching in the same manner as in Example 1 to give a heat-shrinkable resin film. The temperature vs. % shrinkage characteristics of this heat-shrinkable film were substantially the same as the heat-shrinkable film prepared in Example 1.

Example 5.

A vinyl chloride-based resin composition was prepared by uniformly blending 70 parts by weight of a copolymeric resin having an average degree of polymerization of about 800 and composed of 98% weight of vinyl chloride moiety and 2% by weight of vinyl acetate moiety with 1.5 parts by weight of octyltin mercaptide, 0.5 part by weight of stearic acid and 5 parts by weight of the same MBS resin as used in Example 1. The resin composition was shaped into a film having a thickness of 0.15 mm by the method of T-die extrusion.

The thus prepared film was subjected to stretching by 300% in the transverse direction in the same manner as in Example 3 to give a unidirectionally heat-shrinkable film, of which the temperature vs. % shrinkage characteristics were about the same as the heat-shrinkable film prepared in Example 3.

**Claims**

1. A heat-shrinkable shaped article of a polyvinyl chloride-based resin composition made of a copolymeric resin composed of from 99.5% to 85% by weight of vinyl chloride moiety and from 0.5% to 15% by weight of monoolefin moiety.

2. The heat shrinkable shaped article of a polyvinyl chloride-based resin composition as claimed in claim 1 wherein the monoolefin is ethylene or propylene.

3. A method for the preparation of a heat-shrinkable shaped article of a polyvinyl chloride-based resin composition which comprises the steps of:

(a) molding a polyvinyl chloride-based resin composition comprising, as the principal ingredient thereof, a copolymeric resin composed of from 99.5% to 85% by weight of vinyl chloride moiety and from 0.5% to 15% by weight of monoolefin moiety into a shaped body in the form of a film, sheet or tube;

(b) stretching the shaped body at a temperature which is higher by at least 10 °C than but not higher by more than 70 °C than the Clash-Berg heat-distortion temperature of the resin composition; and

(c) cooling the thus stretched shaped body without releasing the stretching force.

4. The method as claimed in claim 3 wherein the temperature which is higher by at least 10 °C than but not higher by more than 70 C than the Clash-Berg heat-distortion temperature of the resin composition is in the range from 50 °C to 100 °C.

5. The method as claimed in claim 3 wherein the monoolefin is ethylene or propylene,

6. The method as claimed in claim 3 wherein the resin composition contains a plasticizer in an amount not exceeding 10% by weight based on the copolymeric resin.

# FIGURE

## DOCUMENTS CONSIDERED TO BE RELEVANT

EP 86402098.7

| Category | Citation of document with indication, where appropriate, of relevant passages | Relevant to claim | CLASSIFICATION OF THE APPLICATION (Int. Cl.4) |
|---|---|---|---|
| X | DE - A - 1 694 176 (FARBENFABRIKEN BAYER AG) <br><br> * Claims; page 3, line 8 - page 5, line 9 * <br><br> -- | 1-6 | C 08 J 5/18 <br> C 08 J 5/00 <br> B 29 D 7/01 <br> B 29 D 23/22 <br> C 08 F 214/06 |
| A | CH - A - 451 491 (FARBWERKE HOECHST AG) <br><br> * Totality * <br><br> ---- | 1,3 | //(B 29 D 7/01 <br> B 29 D 23/22 <br> B 29 K 27:06 <br> B 29 K 23:00) |

TECHNICAL FIELDS SEARCHED (Int. Cl.4)

C 08 J
B 29 D
C 08 F 14/00
C 08 F 214/00

The present search report has been drawn up for all claims

| Place of search | Date of completion of the search | Examiner |
|---|---|---|
| VIENNA | 05-12-1986 | WEIGERSTORFER |